# EUROPEAN PATENT SPECIFICATION

(11) **EP 2 934 038 B1**
(45) Date of publication and mention of the grant of the patent: **12.09.2018**
(21) Application number: 14735282.7
(22) Date of filing: 07.01.2014
(51) Int. Cl.: H04W 24/08, H04L 12/24

(54) **CELL OUTAGE DETECTION AND COMPENSATION METHOD AND DEVICE**
VERFAHREN UND VORRICHTUNG FÜR ZELLENAUSFALLERKENNUNG UND -KOMPENSATION
PROCÉDÉ ET DISPOSITIF DE DÉTECTION ET DE COMPENSATION DE L'INDISPONIBILITÉ D'UNE CELLULE

(30) Priority: 07.01.2013 CN 201310004827
(43) Date of publication of application: 21.10.2015
(73) Proprietor: Huawei Technologies Co., Ltd., Longgang District Shenzhen, Guangdong 518129 (CN)
(72) Inventor: HU, Chunli, Shenzhen Guangdong 518129 (CN)
(74) Representative: Maiwald Patent- und Rechtsanwaltsgesellschaft mbH
(86) International application number: PCT/CN2014/070209
(87) International publication number: WO 2014/106491

(56) References cited:
- CN-A- 101 188 453
- CN-A- 101 594 635
- CN-A- 102 150 450
- CN-A- 102 752 788
- CN-A- 103 052 110
- US-A1- 2012 307 697
- "3rd Generation Partnership Project; Technical Specification Group Services and System Aspects; Telecommunication management; Self-Organizing Networks (SON); Self-healing concepts and requirements (Release 11)", 3GPP STANDARD; 3GPP TS 32.541, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V11.0.0, 25 September 2012 (2012-09-25), pages 1-21, XP050650017, [retrieved on 2012-09-25]
- "3rd Generation Partnership Project; Technical Specification Group Services and System Aspects; Telecommunication Management; Self-Organizing Networks (SON); Concepts and requirements (Release 11)", 3GPP DRAFT; 32500-B10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 22 December 2011 (2011-12-22), XP050905984, Retrieved from the Internet: URL:http://www.3gpp.org/ftp/Specs/2014-12/ Rel-11/32_series/ [retrieved on 2011-12-22]
- "3rd Generation Partnership Project; Technical Specification Group Services and System Aspects; Telecommunication management; Study on OAM aspects of Network Sharing (Release 12)", 3GPP STANDARD; 3GPP TR 32.851, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V0.6.0, 10 December 2012 (2012-12-10), pages 1-29, XP050690964, [retrieved on 2012-12-10]

## Description

### TECHNICAL FIELD

The present invention relates to the field of communication technologies, and in particular, to a method and an apparatus for cell outage detection and compensation.

### BACKGROUND

Currently, to reduce network construction costs and take control of a wireless network at the same time, an operator may share a network with a plurality of operators, that is, a plurality of operators share a same cell.

A cell outage detection and compensation (Cell Outage Detection and Compensation, CODC) technology is an important technology used to automatically detect an outage state of a cell and perform outage compensation for the cell in the outage state. A present cell outage detection and compensation method is used to detect a cell; after it is determined that an outage occurs in a cell, outage compensation is performed for the outage cell to prevent a user from accessing the outage cell. Therefore, in a network sharing scenario, when one or some operators encounter an outage in a cell, it is determined by using the present outage detection method that the entire cell encounters the outage or the entire cell encounters no outage. Apparently, performing compensation for the outage cell based on such a detection result may result in a user of a non-outage operator failing to access the cell.

The article titled "3rd Generation Partnership Project; Technical Specification Group Services and System Aspects; Telecommunication management; Self Organizing Networks (SON); Self-healing concepts and requirements (Release 11)", 3GPP STANDARD; 3GPP TS 32.541, 3RD GENERATION PARTNERSHIP PROJECT (3GPP), Vol. SA WG5, no. V11.0.0, pages 1-21 describes the requirements and architecture for the Self Organizing Network, SON, functions within the operations, administration and maintenance, OAM, system.

US 2012/307697 A1 describes a self-organizing network, SON, capability is provided. A SON may be configured by building intelligence and automation into the network to enable network operators to address various challenges associated with operation of the network. The article titled "3rd Generation Partnership Project; Technical Specification Group Services and System Aspects; Telecommunication Management; Self Organizing Networks (SON); Concepts and requirements (Release 11)", 3GPP DRAFT; 3RD GENERATION PARTNERSHIP PROJECT, describes methods and systems for reducing the operating expenditure associated with the management for a large number of nodes from more than one vendor the concept of the self-organizing networks.

The article titled "3rd Generation Partnership Project; Technical Specification Group Services and System Aspects; Telecommunication management; Study on OAM aspects of Network Sharing (Release 12)", 3GPP STANDARD; 3GPP TR 32.851, 3RD GENERATION PARTNERSHIP PROJECT, vol. SA WG5, no. V0.6.0, 10 December 2012 (2012-12-10), pages 1-29, describes methods and systems for addressing the operational implications of network sharing.

### SUMMARY

In view of this, embodiments of the present invention provide a method and an apparatus for cell outage detection and compensation as defined in independent claims 4 and 1 respectively, so as to still allow a user of a non-outage operator in an outage cell to access the outage cell when cell outage detection and compensation are performed in a network sharing scenario. Preferred embodiments are described in the dependent claims.

By using the foregoing solutions, an outage cell and an outage operator in the outage cell are determined according to monitored working status information of multiple operators in a cell of a base station, and outage compensation specific to the outage operator is performed for the outage cell, which prevents waste of resources for performing unnecessary outage compensation specific to a non-outage operator for the outage cell, and still allows a user of the non-outage operator to access the outage cell for communication.

### BRIEF DESCRIPTION OF DRAWINGS

FIG. 1 is a flowchart of a cell outage detection and compensation method according to Embodiment 1 of the present invention;
FIG. 2 is a flowchart of a cell outage detection method according to Embodiment 2 of the present invention;
FIG. 3 is a schematic structural diagram of a cell outage detection and compensation apparatus according to Embodiment 3 of the present invention;
FIG. 4 is a schematic structural diagram of a base station according to Embodiment 4 of the present invention;
FIG. 5 is a schematic structural diagram of a cell outage detection apparatus according to Embodiment 5 of the present invention; and
FIG. 6 is a schematic structural diagram of a network management system according to Embodiment 6 of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

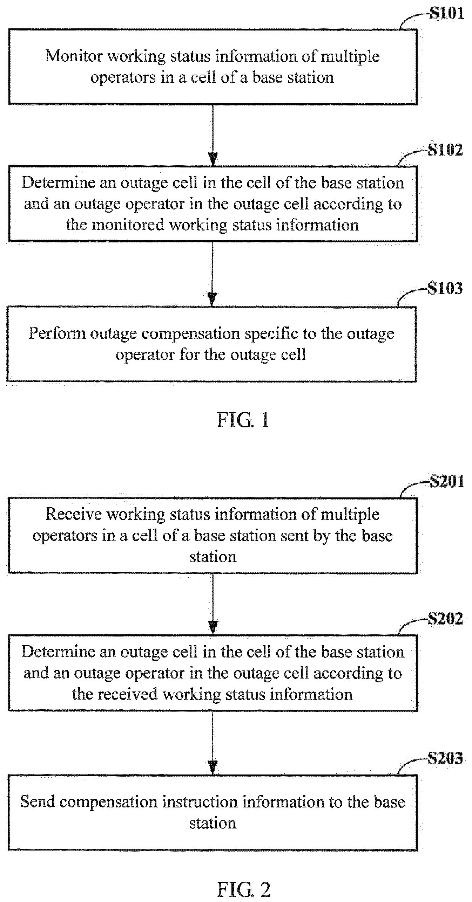

The following uses FIG. 1 as an example to describe a cell outage detection and compensation method according to Embodiment 1 of the present invention in detail. FIG. 1 is a flowchart of the cell outage detection and compensation method according to Embodiment 1 of the present invention. The cell outage detection and compensation method may be performed by a base station. As shown in FIG. 1, the outage cell outage detection and compensation method includes the following steps:
Step S101: Monitor working status information of multiple operators in a cell of a base station.

The working status information may be an alarm that relates only to an operator, a key performance indicator (Key Performance Indicator, KPI) of the base station that relates only to an operator, an alarm that relates to an operator and a cell, or a KPI of the base station that relates to an operator and a cell.

Step S102: Determine an outage cell in the cell of the base station and an outage operator in the outage cell according to the monitored working status information.

When the working status information monitored by the base station is an alarm that relates only to an operator, it indicates that the operator corresponding to the alarm encounters an outage. Then it can be determined that a cell including the operator corresponding to the alarm encounters the outage and that the operator corresponding to the alarm encounters the outage in all cells that include the outage operator.

For example, the base station has a cell 1, a cell 2, and a cell 3. The cell 1 includes an operator 1, an operator 2, and an operator 3. The cell 2 includes the operator 1, the operator 2, and the operator 3. The cell 3 includes the operator 1 and the operator 2. When the detected alarm relates only to the operator 3, it can be determined that the cell 1 and the cell 2 including the operator 3 encounter an outage and that the operator 3 in the cell 1 and the cell 2 encounters the outage.

When the working status information monitored by the base station is a KPI of the base station that relates only to an operator and the KPI is less than a preset threshold, it indicates that the operator corresponding to the KPI encounters an outage. Then it can be determined that a cell including the operator corresponding to the KPI encounters the outage and that the operator corresponding to the KPI encounters the outage in all cells that include the outage operator.

The KPI may specifically be a user quantity indicator of the operator, a throughput indicator of the operator, or an indicator that relates to an enhanced radio access bearer (Enhanced Radio Access Bearer, E-RAB) of the operator. The base station stores normal KPIs and outage thresholds in advance for the operators. When an operator encounters an outage, a KPI of the base station corresponding to the outage operator changes. When the KPI is less than an outage threshold, it can be determined that a cell including the operator corresponding to the KPI encounters the outage and that the operator corresponding to the KPI encounters the outage in all cells that include the outage operator.

For example, a normal user quantity indicator stored by the base station in advance for a first operator and a second operator is 10 and an outage threshold is 5. If the first operator encounters an outage, the user quantity indicator of the first operator decreases. When the user quantity indicator decreases to a value that is less than 5, it can be determined that a cell including the first operator encounters the outage and the first operator encounters the outage.

It should be noted that when one of the foregoing indicators is less than a preset threshold, it can be determined that a cell including the operator corresponding to the indicator encounters an outage and that the operator corresponding to the indicator encounters the outage in all cells that include the outage operator.

When the working status information monitored by the base station is an alarm that relates to an operator and a cell, it indicates that the cell corresponding to the alarm and the operator corresponding to the alarm in the cell corresponding to the alarm encounter an outage. Then it can be determined that the cell corresponding to the alarm encounters the outage and that the operator corresponding to the alarm in encounters the outage in the cell corresponding to the alarm.

For example, the base station has a cell 1, a cell 2, and a cell 3. The cell 1 includes an operator 1, an operator 2, and an operator 3. The cell 2 includes the operator 1, the operator 2, and the operator 3. The cell 3 includes the operator 1 and the operator 2. When the detected alarm is an alarm that relates to the cell 1 and the operator 3, it can be determined that the cell 1 corresponding to the alarm encounters an outage and that the operator 3 corresponding to the alarm encounters the outage in the cell 1.

When the working status information monitored by the base station is a KPI of the base station that relates to an operator and a cell and the KPI is less than a preset threshold, it indicates that the cell corresponding to the KPI and the operator corresponding to the KPI in the cell corresponding to the KPI encounter an outage. Then it can be determined that the cell corresponding to the KPI encounters the outage and that the operator corresponding to the KPI encounters the outage in the cell corresponding to the KPI.

For example, the base station has a cell 1, a cell 2, and a cell 3. The cell 1 includes an operator 1, an operator 2, and an operator 3. The cell 2 includes the operator 1, the operator 2, and the operator 3. The cell 3 includes the operator 1 and the operator 2. When the detected KPI is less than a preset threshold and relates to the cell 1 and the operator 2, it can be determined that the cell 1 corresponding to the KPI encounters an outage and that the operator 2 corresponding to the KPI encounters the outage in the cell 1.

It should be noted that when one of the foregoing indicators is less than a preset threshold, it can be determined that the cell corresponding to the indicator encounters an outage and that the operator corresponding to the indicator encounters the outage in the cell corresponding to the indicator.

By monitoring internal alarms and/or KPIs of the base station that relate to the operators, an outage cell and an outage operator in the outage cell may be accurately determined, so that only outage compensation specific to the outage operator is performed for the outage cell when outage compensation is performed for the outage cell.

Step S103: Perform outage compensation specific to the determined outage operator for the outage cell.

Optionally, the base station prevents a user of the outage operator from accessing the outage cell that includes the outage operator. The user of the outage operator may be prevented from accessing the outage cell that includes the outage operator by modifying status information related to the outage operator in a broadcast message sent by the base station for the outage cell. The status information may be a barred state, a public land mobile network account and its reserved state, and the like. For example, change cell reservation indication (Cell Reserved For Operator Use) status information corresponding to the outage operator in the broadcast message to a reserved state, so as to prevent the user of the outage operator from accessing the outage cell. The user of the outage operator may also be prevented from accessing the outage cell that includes the outage operator by rejecting access of the user of the outage operator to the outage cell when the user of the outage operator requests to access the outage cell. After the foregoing outage compensation is performed for the outage cell, the user of the outage operator may be prevented from accessing the outage cell, without impacting access of a user of a non-outage operator to the outage cell.

In addition, it is possible that all operators included in a cell encounter an outage. With respect to this case, determine whether all operators in the outage cell encounter an outage; if they do, prevent users of the outage operators from accessing the outage cell by modifying status information related to the outage cell in a broadcast message sent by the base station for the outage cell. These two processing solutions are similar to those in other embodiments.

Optionally, a user of the outage operator in a neighbouring cell of the outage cell that includes the outage operator is prevented from accessing the outage cell. A parameter of the neighbouring cell of the outage cell may be modified for the outage operator included in the outage cell, so as to prevent the user of the outage operator in the neighbouring cell from accessing the outage cell. After the foregoing outage compensation is performed for the outage cell, the user of the outage operator in the neighbouring cell of the outage cell that includes the outage operator may be prevented from accessing the outage cell, without impacting access of other users in the neighbouring cell to the outage cell.

In addition, the following steps may be included between the steps S102 and S103:
Step S104: Send cell outage information to a network management system, where the cell outage information includes an identifier of the outage cell and an identifier of each outage operator in the outage cell.

After receiving the cell outage information, the network management system separately obtains the outage cell and the outage operator that require outage compensation, according to the identifier of the outage cell and the identifier of each outage operator in the outage cell. Then, according to the cell outage information, the network management system instructs the base station to perform compensation for the outage cell.

Step S105: Receive compensation instruction information that the network management system sends according to the cell outage information.

The compensation instruction information is used to instruct the base station to prevent a user of the outage operator from accessing the outage cell that includes the outage operator. The compensation instruction information may also be used to instruct the base station to prevent a user of the outage operator in a neighbouring cell of the outage cell that includes the outage operator from accessing the outage cell.

Accordingly, step S103 for performing the outage compensation specific to the outage operator for the outage cell is specifically: according to the received compensation instruction information, preventing a user of the outage operator from accessing the outage cell that includes the outage operator, and preventing a user of the outage operator in the neighbouring cell of the outage cell that includes the outage operator from accessing the outage cell.

Using the cell outage detection and compensation method according to Embodiment 1, a base station monitors itself, obtains working status information of multiple operators in a cell of the base station, determines an outage cell and an outage operator in the outage cell according to the working status information of the multiple operators, and performs outage compensation specific to the outage operator for the outage cell. This prevents waste of resources for performing unnecessary outage compensation specific to a non-outage operator for the outage cell, and allows a user of the non-outage operator to access the outage cell that includes the non-outage operator for communication.

The following uses FIG. 2 as an example to describe a cell outage detection method according to Embodiment 2 of the present invention in detail. FIG. 2 is a flowchart of the cell outage detection method according to Embodiment 2 of the present invention. The cell outage detection method may be performed by a network management system. As shown in FIG. 2, the cell outage detection method includes the following steps:
Step S201: Receive working status information of multiple operators in a cell of a base station sent by the base station.

The base station monitors itself and sends the monitored working status information of the multiple operators in the cell of the base station to a network management system.

The working status information may be an alarm that relates only to an operator, a KPI of the base station that relates only to an operator, an alarm that relates to an operator and a cell, or a KPI of the base station that relates to an operator and a cell. The KPI may specifically be a user quantity indicator, a throughput indicator, or an E-RAB related indicator of the operator.

Step S202: Determine an outage cell in the cell of the base station and an outage operator in the outage cell according to the received working status information.

When the received working status information is an alarm that relates only to an operator, it indicates that the operator corresponding to the alarm encounters an outage. Then it can be determined that a cell including the operator corresponding to the alarm encounters the outage and that the operator corresponding to the alarm encounters the outage in all cells that include the outage operator.

When the received working status information is a KPI of the base station that relates only to an operator and the KPI is less than a preset threshold, it indicates that the operator corresponding to the KPI encounters an outage. Then it can be determined that a cell including the operator corresponding to the KPI encounters the outage and that the operator corresponding to the KPI encounters the outage in all cells that include the outage operator.

The network management system stores normal KPIs and outage thresholds in advance for operators. When an operator encounters an outage, a KPI corresponding to the outage operator changes in the network management system. When the KPI is less than an outage threshold, it can be determined that a cell including the operator corresponding to the KPI encounters the outage and that the operator corresponding to the KPI encounters the outage in all cells that include the outage operator.

It should be noted that when one of the foregoing indicators is less than a preset threshold, it can be determined that a cell including the operator corresponding to the indicator encounters an outage and that the operator corresponding to the indicator encounters the outage in all cells that include the outage operator.

When the received working status information is an alarm that relates to an operator and a cell, it indicates that the cell corresponding to the alarm and the operator corresponding to the alarm in the cell corresponding to the alarm encounter an outage. Then it can be determined that the cell corresponding to the alarm encounters the outage and that the operator corresponding to the alarm encounters the outage in the cell corresponding to the alarm.

When the received working status information is a KPI of the base station that relates to an operator and a cell and the KPI is less than a preset threshold, it indicates that the cell corresponding to the KPI and the operator corresponding to the KPI in the cell corresponding to the KPI encounter an outage. Then it can be determined that the cell corresponding to the KPI encounters the outage and that the operator corresponding to the KPI encounters the outage in the cell corresponding to the KPI.

It should be noted that when one of the foregoing indicators is less than a preset threshold, it can be determined that the cell corresponding to the indicator encounters an outage and that the operator corresponding to the indicator encounters the outage in the cell corresponding to the indicator.

According to received internal alarms and/or KPIs of the base station that relate to operators, an outage cell and an outage operator in the outage cell may be accurately determined, so that only outage compensation specific to the outage operator is performed for the outage cell when the base station performs outage compensation for the outage cell.

Step S203: Send compensation instruction information to the base station.

The compensation instruction information is used to instruct the base station to perform outage compensation specific to the outage operator for the outage cell according to the compensation instruction information.

Optionally, the base station prevents a user of the outage operator from accessing the outage cell that includes the outage operator according to the compensation instruction information. The implementation manner of preventing the user of the outage operator from accessing the outage cell that includes the outage operator is the same as that in Embodiment 1, and is not further described herein.

The base station may also prevent a user of the outage operator in a neighbouring cell of the outage cell that includes the outage operator from accessing the outage cell according to the compensation instruction information. A parameter of the neighbouring cell of the outage cell may be modified for the outage operator included in the outage cell, so as to prevent the user of the outage operator in the neighbouring cell from accessing the outage cell. After the foregoing outage compensation is performed for the outage cell, the user of the outage operator in the neighbouring cell of the outage cell that includes the outage operator may be prevented from accessing the outage cell, without impacting access of other users in the neighbouring cell to the outage cell.

Using the cell outage detection method according to Embodiment 2, a network management system determines an outage cell and an outage operator in the outage cell according to working status information of multiple operators in a cell of a base station sent by the base station, and sends compensation instruction information to the base station, so that the base station performs outage compensation specific to the outage operator for the outage cell according to the compensation instruction information. This prevents waste of resources for performing unnecessary outage compensation specific to a non-outage operator for the outage cell, and allows a user of the non-outage operator to access the outage cell for communication.

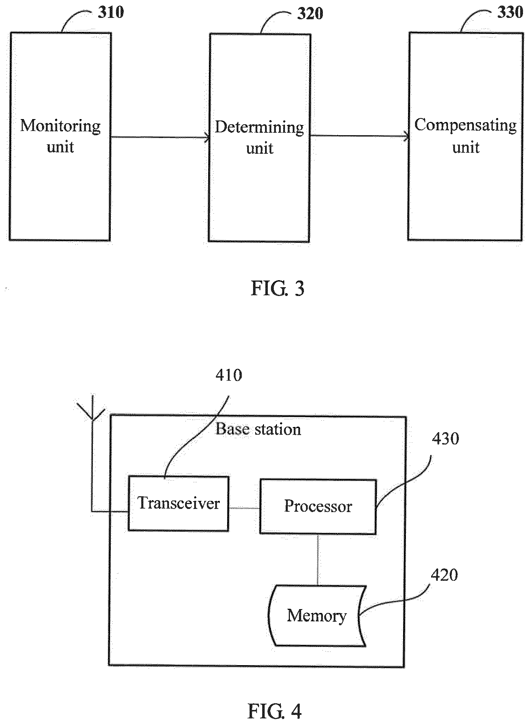

The following uses FIG. 3 as an example to describe a cell outage detection and compensation apparatus according to Embodiment 3 of the present invention in detail. FIG. 3 is a schematic structural diagram of the cell outage detection and compensation apparatus according to Embodiment 3 of the present invention. The cell outage detection and compensation apparatus is applied to a base station to implement the cell outage detection and compensation method in Embodiment 1 of the present invention. As shown in FIG. 3, the cell outage detection and compensation apparatus includes: a monitoring unit 310, a determining unit 320, and a compensating unit 330.

The monitoring unit 310 is configured to monitor working status information of multiple operators in a cell of a base station in which the apparatus locates.

The determining unit 320 is configured to determine an outage cell in the cell of the base station and an outage operator in the outage cell according to the working status information monitored by the monitoring unit 310.

When the working status information monitored by the monitoring unit 310 is an alarm that relates only to an operator, it indicates that the operator corresponding to the alarm encounters an outage. Then, according to the alarm, the determining unit 320 may determine that a cell including the operator corresponding to the alarm encounters the outage and that the operator corresponding to the alarm encounters the outage in all cells that include the outage operator.

When the working status information monitored by the monitoring unit 310 is a KPI of the base station that relates only to an operator and the KPI is less than a preset threshold, it indicates that the operator corresponding to the KPI encounters an outage. Then, according to the KPI, the determining unit 320 may determine that a cell including the operator corresponding to the KPI encounters the outage and that the operator corresponding to the KPI encounters the outage in all cells that include the outage operator.

The KPI may specifically be a user quantity indicator of the operator, a throughput indicator of the operator, or an indicator that relates to an enhanced radio access bearer (Enhanced Radio Access Bearer, E-RAB) of the operator. The apparatus stores normal KPIs and outage thresholds in advance for operators. When an operator encounters an outage, a KPI of the base station corresponding to the outage operator changes. When the KPI is less than an outage threshold, the determining unit 320 can determine that a cell including the operator corresponding to the KPI encounters the outage and that the operator corresponding to the KPI encounters the outage in all cells that include the outage operator.

It should be noted that when one of the foregoing indicators is less than a preset threshold, the determining unit 320 can determine that a cell including the operator corresponding to the indicator encounters an outage and that the operator corresponding to the indicator encounters the outage in all cells that include the outage operator.

When the working status information monitored by the monitoring unit 310 is an alarm that relates to an operator and a cell, it indicates that the cell corresponding to the alarm and the operator corresponding to the alarm in the cell corresponding to the alarm encounter an outage. Then, according to the alarm, the determining unit 320 may determine that the cell corresponding to the alarm encounters the outage and that the operator corresponding to the alarm encounters the outage in the cell corresponding to the alarm.

When the working status information monitored by the monitoring unit 310 is a KPI of the base station that relates to an operator and a cell and the KPI is less than a preset threshold, it indicates that the cell corresponding to the KPI and the operator corresponding to the KPI in the cell corresponding to the KPI encounter an outage. Then, according to the KPI, the determining unit 320 may determine that the cell corresponding to the KPI encounters the outage and that the operator corresponding to the KPI encounters the outage in the cell corresponding to the KPI.

It should be noted that when one of the foregoing indicators is less than a preset threshold, the determining unit 320 can determine that the cell corresponding to the indicator encounters an outage and that the operator corresponding to the indicator encounters the outage in the cell corresponding to the indicator.

After the monitoring unit 310 monitors internal alarms and/or KPIs of the base station that relate to operators, the determining unit 320 can accurately determine the outage cell and the outage operator in the outage cell, so that the compensating unit 330 performs only outage compensation specific to the outage operator for the outage cell when performing outage compensation for the outage cell.

The compensating unit 330 is configured to perform outage compensation specific to the outage operator for the outage cell according to the outage cell and the outage operator determined by the determining unit 320.

Optionally, the compensating unit 330 prevents a user of the outage operator from accessing the outage cell that includes the outage operator according to the outage cell and the outage operator determined by the determining unit 320. The compensating unit 330 may prevent the user of the outage operator from accessing the outage cell that includes the outage operator by modifying status information related to the outage operator in a broadcast message sent by the base station for the outage cell. The status information may be a barred state, a public land mobile network account and its reserved state, and the like. For example, the compensating unit 330 changes cell reservation indication (Cell Reserved For Operator Use) status information corresponding to the outage operator in the broadcast message to a reserved state, so as to prevent the user of the outage operator from accessing the outage cell. The compensating unit 330 may also prevent the user of the outage operator from accessing the outage cell that includes the outage operator by rejecting access of the user of the outage operator to the outage cell when the user of the outage operator requests to access the outage cell. After performing the foregoing outage compensation for the outage cell, the compensating unit 330 may prevent the user of the outage operator from accessing the outage cell, without impacting access of a user of a non-outage operator to the outage cell.

Similar to the foregoing method embodiments, the compensating unit 330 may also determine whether all operators in the outage cell encounter the outage. If they do, the compensating unit 330 modifies the status information related to the outage cell in the broadcast message sent by the base station for the outage cell to prevent the user of the outage operator from accessing the outage cell.

Optionally, the compensating unit 330 may also prevent a user of the outage operator in a neighbouring cell of the outage cell that includes the outage operator from accessing the outage cell according to the outage cell and the outage operator determined by the determining unit 320. The compensating unit 330 may modify a parameter of the neighbouring cell of the outage cell for the outage operator included in the outage cell, so as to prevent the user of the outage operator in the neighbouring cell from accessing the outage cell. After performing the foregoing outage compensation for the outage cell, the compensating unit 330 may prevent the user of the outage operator in the neighbouring cell of the outage cell that includes the outage operator from accessing the outage cell, without impacting access of other users in the neighbouring cell to the outage cell.

In addition, the cell outage detection apparatus may further include:
a sending unit, configured to send cell outage information to a network management system, where the cell outage information includes an identifier of the outage cell and an identifier of each outage operator in the outage cell; and
after receiving the cell outage information, the network management system separately obtains the outage cell and the outage operator that require outage compensation, according to the identifier of the outage cell and the identifier of each outage operator in the outage cell; then, according to the cell outage information, the network management system instructs the apparatus to perform compensation for the outage cell; and
a receiving unit, configured to receive compensation instruction information that the network management system sends according to the cell outage information.

The compensation instruction information is used to instruct the apparatus to prevent a user of the outage operator from accessing the outage cell that includes the outage operator. The compensation instruction information may also be used to instruct the apparatus to prevent a user of the outage operator in a neighbouring cell of the outage cell that includes the outage operator from accessing the outage cell.

Accordingly, the compensating unit 330 prevents the user of the outage operator from accessing the outage cell that includes the outage operator and prevents the user of the outage operator in the neighbouring cell of the outage cell that includes the outage operator from accessing the outage cell according to the compensation instruction information.

The cell outage detection apparatus according to Embodiment 3 obtains working status information of multiple operators in a cell of the base station in which the apparatus locates by monitoring the base station, determines an outage cell and an outage operator in the outage cell according to the working status information of the multiple operators, and performs outage compensation specific to the outage operator for the outage cell. This prevents waste of resources for performing unnecessary outage compensation specific to a non-outage operator for the outage cell, and allows a user of the non-outage operator to access the outage cell that includes the non-outage operator for communication.

In terms of hardware implementation, the sending unit may be a transmitter or a transceiver, the receiving unit may be a receiver or a transceiver, and the sending unit and the receiving unit may be integrated to form a transceiver unit that is a transceiver in hardware implementation. The monitoring unit 310, determining unit 320, and compensating unit 330 may be embedded in or independent of a processor of the base station in a hardware form, and may also be stored in a memory of the base station in a software form so that the processor performs corresponding operations of each module. The processor may be a central processing unit (CPU), a microprocessor, a single-chip microcomputer, and the like.

FIG. 4 is a schematic structural diagram of a base station according to Embodiment 4 of the present invention. As shown in FIG 4, the base station includes a transceiver 410, a memory 420, and a processor 430 that is separately connected to the transceiver 410 and the memory 420. Certainly, the base station may also include common parts such as an antenna, a baseband processing part, an intermediate frequency and radio frequency processing parts, and an input output apparatus, which is not limited in this embodiment of the present invention.

The memory 420 stores a group of program code, and the processor 430 is configured to call the program code stored in the memory 420 to perform the following operations:
monitoring working status information of multiple operators in a cell of the base station;
determining an outage cell in the cell of the base station and an outage operator in the outage cell according to the monitored working status information; and
performing outage compensation specific to the outage operator for the outage cell.

Further, the determining an outage cell in the cell of the base station and an outage operator in the outage cell according to the monitored working status information includes:
when the monitored working status information is an alarm that relates only to an operator, or when the monitored working status information is a key performance indicator of the base station that relates only to an operator and the key performance indicator is less than a preset threshold, determining that a cell of the base station including the operator corresponding to the alarm or the key performance indicator encounters an outage and that the operator corresponding to the alarm or the key performance indicator encounters the outage in the cell of the base station; or
when the monitored working status information is an alarm that relates to an operator and a cell, or when the monitored working status information is a key performance indicator of the base station that relates to an operator and a cell and the key performance indicator is less than a preset threshold, determining that the cell corresponding to the alarm or the key performance indicator encounters an outage and that the operator corresponding to the alarm or the key performance indicator encounters the outage in the cell corresponding to the alarm or the key performance indicator.

Further, the performing outage compensation specific to the outage operator for the outage cell includes:
preventing a user of the outage operator from accessing the outage cell by modifying status information related to the outage operator in a broadcast message sent by the base station for the outage cell; or determining whether all operators in the outage cell encounter the outage, and if they do, preventing users of the outage operators from accessing the outage cell by modifying status information related to the outage cell in a broadcast message sent by the base station for the outage cell.

Further, the modifying status information related to the outage operator in a broadcast message sent by the base station for the outage cell includes:
changing cell reservation indication (Cell Reserved For Operator Use) status information corresponding to the outage operator in the broadcast message to a reserved state. Further, the performing outage compensation specific to the outage operator for the outage cell includes:
rejecting access of a user of the outage operator in the outage cell to the outage cell when the user of the outage operator requests to access the outage cell.

Further, the performing outage compensation specific to the outage operator for the outage cell according to the compensation instruction information includes:
preventing a user of the outage operator in a neighbouring cell of the outage cell from accessing the outage cell.

Further, the processor 430 also calls the program code stored in the memory 420 to perform the following operations:
sending cell outage information to a network management system, where the cell outage information includes an identifier of the outage cell and an identifier of each outage operator in the outage cell; and
receiving compensation instruction information that the network management system sends according to the cell outage information; and
the performing outage compensation specific to the outage operator for the outage cell is specifically:
   performing the outage compensation specific to the outage operator for the outage cell according to the compensation instruction information.

It should be noted that both the apparatus shown in FIG 3 and the base station shown in FIG. 4 may be configured to implement the method in Embodiment 1.

The base station according to Embodiment 4 monitors itself, obtains working status information of multiple operators in a cell of the base station, determines an outage cell and an outage operator in the outage cell according to the working status information of the multiple operators, and performs outage compensation specific to the outage operator for the outage cell. This prevents waste of resources for performing unnecessary outage compensation specific to a non-outage operator for the outage cell, and allows a user of the non-outage operator to access the outage cell that includes the non-outage operator for communication.

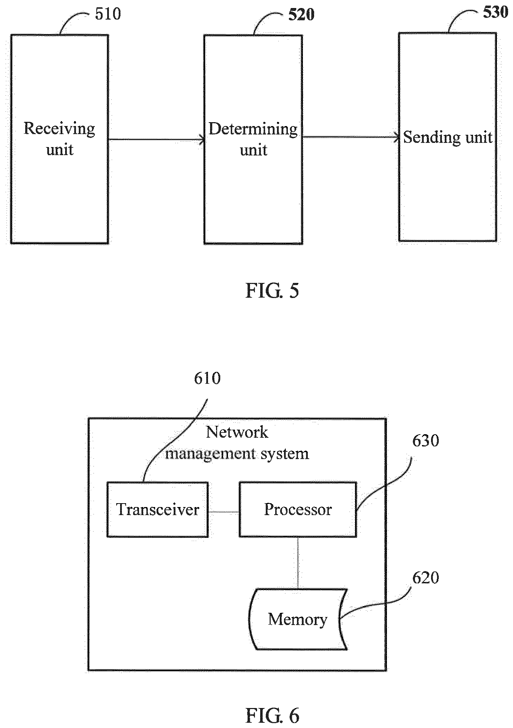

The following uses FIG. 5 as an example to describe a cell outage detection apparatus according to Embodiment 5 of the present invention in detail. FIG. 5 is a schematic structural diagram of the cell outage detection apparatus according to Embodiment 5 of the present invention. The cell outage detection apparatus is applied to a network management system to implement the cell outage detection method in Embodiment 2 of the present invention. As shown in FIG. 5, the cell outage detection apparatus includes: a receiving unit 510, a determining unit 520, and a sending unit 530.

The receiving unit 510 is configured to receive working status information of multiple operators in a cell of a base station sent by the base station.

The base station monitors itself and sends the monitored working status information of the multiple operators in the cell of the base station to a network management system.

The working status information may be an alarm that relates only to an operator, a KPI of the base station that relates only to an operator, an alarm that relates to an operator and a cell, or a KPI of the base station that relates to an operator and a cell. The KPI may specifically be a user quantity indicator, a throughput indicator, or an E-RAB related indicator of the operator.

The determining unit 520 is configured to determine an outage cell in the cell of the base station and an outage operator in the outage cell according to the working status information received by the receiving unit 510.

When the working status information received by the receiving unit 510 is an alarm that relates only to an operator, it indicates that the operator corresponding to the alarm encounters an outage. Then, according to the alarm, the determining unit 520 may determine that a cell including the operator corresponding to the alarm encounters the outage and that the operator corresponding to the alarm encounters the outage in all cells that include the outage operator.

When the working status information received by the receiving unit 510 is a KPI of the base station that relates only to an operator and the KPI is less than a preset threshold, it indicates that the operator corresponding to the KPI encounters an outage. Then the determining unit 520 can determine that a cell including the operator corresponding to the KPI encounters the outage and that the operator corresponding to the KPI encounters the outage in all cells that include the outage operator.

The apparatus stores normal KPIs and outage thresholds in advance for operators. When an operator encounters an outage, a KPI corresponding to the outage operator changes. When the KPI is less than an outage threshold, the determining unit 520 can determine that a cell including the operator corresponding to the KPI encounters the outage and that the operator corresponding to the KPI encounters the outage in all cells that include the outage operator.

It should be noted that when one of the foregoing indicators is less than a preset threshold, the determining unit 520 can determine that a cell including the operator corresponding to the indicator encounters an outage and that the operator corresponding to the indicator encounters the outage in all cells that include the outage operator.

When the working status information received by the receiving unit 510 is an alarm that relates to an operator and a cell, it indicates that the cell corresponding to the alarm and the operator corresponding to the alarm in the cell corresponding to the alarm encounter an outage. Then, according to the alarm, the determining unit 520 may determine that the cell corresponding to the alarm encounters the outage and that the operator corresponding to the alarm encounters the outage in the cell corresponding to the alarm.

When the working status information received by the receiving unit 510 is a KPI of the base station that relates to an operator and a cell and the KPI is less than a preset threshold, it indicates that the cell corresponding to the KPI and the operator corresponding to the KPI in the cell corresponding to the KPI encounter an outage. Then, according to the KPI, the determining unit 520 may determine that the cell corresponding to the KPI encounters the outage and that the operator corresponding to the KPI encounters the outage in the cell corresponding to the KPI.

It should be noted that when one of the foregoing indicators is less than a preset threshold, the determining unit 520 can determine that the cell corresponding to the indicator encounters an outage and that the operator corresponding to the indicator encounters the outage in the cell corresponding to the indicator.

According to internal alarms and/or KPIs of the base station that relate to operators and that are received by the receiving unit 510, the determining unit 520 can accurately determine the outage cell and the outage operator in the outage cell, so that only outage compensation specific to the outage operator is performed for the outage cell when the base station performs outage compensation for the outage cell.

The sending unit 530 is configured to send compensation instruction information to the base station according to the outage cell and the outage operator determined by the determining unit 520.

The compensation instruction information is used to instruct the base station to perform outage compensation specific to the outage operator for the outage cell according to the compensation instruction information.

The compensation instruction information may also be used to instruct the base station to prevent a user of the outage operator in a neighbouring cell of the outage cell that includes the outage operator from accessing the outage cell.

The cell outage detection apparatus according to Embodiment 5 determines an outage cell and an outage operator in the outage cell according to working status information of multiple operators in a cell of a base station sent by the base station, and sends compensation instruction information to the base station so that the base station performs outage compensation specific to the outage operator for the outage cell according to the compensation instruction information. This prevents waste of resources for performing unnecessary outage compensation specific to a non-outage operator for the outage cell, and allows a user of the non-outage operator to access the outage cell for communication.

In terms of hardware implementation, the receiving unit 510 may be a receiver or a transceiver, the sending unit 530 may be a transmitter or a transceiver, and the receiving unit 510 and the sending unit 530 may be integrated to form a transceiver unit that is a transceiver in hardware implementation. The determining unit 520 may be embedded in or independent of a processor of the network management system in a hardware form, and may also be stored in a memory of the network management system in a software form so that the processor calls and performs corresponding operations of each module. The processor may be a central processing unit (CPU), a microprocessor, a single-chip microcomputer, and the like.

FIG 6 is a schematic structural diagram of a network management system according to Embodiment 6 of the present invention. As shown in FIG. 6, the network management system includes a transceiver 610, a memory 620, and a processor 630 that is separately connected to the transceiver 610 and the memory 620.

The memory 620 stores a group of program code, and the processor 630 is configured to call the program code stored in the memory 620 to perform the following operations:
receiving working status information of multiple operators in a cell of a base station sent by the base station;
determining an outage cell in the cell of the base station and an outage operator in the outage cell according to the working status information; and
sending compensation instruction information to the base station, where the compensation instruction information is used to instruct the base station to perform outage compensation specific to the outage operator for the outage cell according to the compensation instruction information.

Further, the determining an outage cell in the cell of the base station and an outage operator in the outage cell according to the working status information includes:
when the working status information is an alarm that relates only to an operator, or when the working status information is a key performance indicator of the base station that relates only to an operator and the key performance indicator is less than a preset threshold, determining that a cell of the base station including the operator corresponding to the alarm or the key performance indicator encounters an outage and that the operator corresponding to the alarm or the key performance indicator encounters the outage in the cell of the base station; or
when the working status information is an alarm that relates to an operator and a cell, or when the working status information is a key performance indicator of the base station that relates to an operator and a cell and the key performance indicator is less than a preset threshold, determining that the cell corresponding to the alarm or the key performance indicator encounters an outage and that the operator corresponding to the alarm or the key performance indicator encounters the outage in the cell corresponding to the alarm or the key performance indicator.

Further, the compensation instruction information is used to instruct the base station to prevent a user of the outage operator from accessing the outage cell.

Further, the compensation instruction information is specifically further used to instruct the base station to prevent a user of the outage operator in a neighbouring cell of the outage cell from accessing the outage cell.

It should be noted that both the apparatus shown in FIG. 5 and the network management system shown in FIG. 6 may be configured to implement the method in Embodiment 2.

The network management system according to Embodiment 6 determines an outage cell and an outage operator in the outage cell according to working status information of multiple operators in a cell of a base station sent by the base station, and sends compensation instruction information to the base station so that the base station performs outage compensation specific to the outage operator for the outage cell according to the compensation instruction information. This prevents waste of resources for performing unnecessary outage compensation specific to a non-outage operator for the outage cell, and allows a user of the non-outage operator to access the outage cell for communication.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions.

Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

In combination with the embodiments disclosed in this specification, method or algorithm steps may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The foregoing specific embodiments clarify the objective, technical solutions, and benefits of the present invention in detail. It should be understood that the foregoing descriptions are merely specific embodiments of the present invention, but are not intended to limit the protection scope of the present invention. Any modification, equivalent replacement, or improvement made without departing from the principle of the present invention should fall within the protection scope of the present invention.

## Claims

1. A cell outage detection and compensation apparatus, wherein the apparatus comprises:
a monitoring unit (310), configured to monitor working status information of multiple operators in a cell of a base station;
a determining unit (320), configured to determine an outage cell of the base station and an outage operator in the outage cell according to the working status information monitored by the monitoring unit; and
a compensating unit (330, 520), configured to perform, according to the outage cell and the outage operator determined by the determining unit, outage compensation specific to the outage operator for the outage cell;
a sending unit (530), configured to send cell outage information to a network management system, wherein the cell outage information comprises an identifier of the outage cell and an identifier of each outage operator in the outage cell; and
a receiving unit (510), configured to receive compensation instruction information from the network management system according to the cell outage information; and
the compensating unit (330, 520) is specifically configured to perform the outage compensation specific to the outage operator for the outage cell according to the compensation instruction information received by the receiving unit.

2. The apparatus according to claim 1, wherein the determining unit is specifically configured to:
when the monitored working status information is an alarm that relates only to an operator, or when the monitored working status information is a key performance indicator of the base station that relates only to an operator and the key performance indicator is less than a preset threshold, determine that a cell of the base station including the operator corresponding to the alarm or the key performance indicator encounters an outage and that the operator corresponding to the alarm or the key performance indicator encounters the outage in the cell of the base station; or
when the monitored working status information is an alarm that relates to an operator and a cell, or when the monitored working status information is a key performance indicator of the base station that relates to an operator and a cell and the key performance indicator is less than a preset threshold, determine that the cell corresponding to the alarm or the key performance indicator encounters an outage and that the operator corresponding to the alarm or the key performance indicator encounters the outage in the cell corresponding to the alarm or the key performance indicator.

3. The apparatus according to claim 1 or 2, wherein the compensating unit is configured to:
according to the outage cell and the outage operator determined by the determining unit, prevent a user of the outage operator from accessing the outage cell by modifying status information related to the outage operator in a broadcast message sent by the base station for the outage cell, or determine whether all operators in the outage cell encounter the outage, and if they do, prevent users of the outage operators from accessing the outage cell by modifying status information related to the outage cell in a broadcast message sent by the base station for the outage cell; or
according to the outage cell and the outage operator determined by the determining unit, reject access of a user of the outage operator in the outage cell to the outage cell when the user of the outage operator requests to access the outage cell; or
according to the outage cell and the outage operator determined by the determining unit, prevent a user of the outage operator in a neighbouring cell of the outage cell from accessing the outage cell.

4. A cell outage detection and compensation method, wherein the method comprises:
monitoring (S101), by a base station, working status information of multiple operators in a cell of the base station;
determining (S102) an outage cell of the base station and an outage operator in the outage cell according to the monitored working status information; and
performing (SI03) outage compensation specific to the outage operator for the outage cell;
before the performing outage compensation specific to the outage operator for the outage cell, the method further comprises:
sending cell outage information to a network management system, wherein the cell outage information comprises an identifier of the outage cell and an identifier of each outage operator in the outage cell; and
receiving compensation instruction information that the network management system sends according to the cell outage information; and
the performing outage compensation specific to the outage operator for the outage cell specifically comprises:
performing the outage compensation specific to the outage operator for the outage cell according to the compensation instruction information.

5. The method according to claim 4, wherein the determining an outage cell of the base station and an outage operator in the outage cell according to the monitored working status information comprises:
when the monitored working status information is an alarm that relates only to an operator, or when the monitored working status information is a key performance indicator of the base station that relates only to an operator and the key performance indicator is less than a preset threshold, determining that a cell of the base station including the operator corresponding to the alarm or the key performance indicator encounters an outage and that the operator corresponding to the alarm or the key performance indicator encounters the outage in the cell of the base station; or
when the monitored working status information is an alarm that relates to an operator and a cell, or when the monitored working status information is a key performance indicator of the base station that relates to an operator and a cell and the key performance indicator is less than a preset threshold, determining that the cell corresponding to the alarm or the key performance indicator encounters an outage and that the operator corresponding to the alarm or the key performance indicator encounters the outage in the cell corresponding to the alarm or the key performance indicator.

6. The method according to claim 4 or 5, wherein the performing outage compensation specific to the outage operator for the outage cell comprises:
preventing a user of the outage operator from accessing the outage cell by modifying status information related to the outage operator in a broadcast message sent by the base station for the outage cell; or
determining whether all operators in the outage cell encounter the outage, and if they do, preventing users of the outage operators from accessing the outage cell by modifying status information related to the outage cell in a broadcast message sent by the base station for the outage cell; or
rejecting access of a user of the outage operator in the outage cell to the outage cell when the user of the outage operator requests to access the outage cell; or
preventing a user of the outage operator in a neighbouring cell of the outage cell from accessing the outage cell according to compensation instruction information.

7. The method according to claim 6, wherein the modifying status information related to the outage operator in a broadcast message sent by the base station for the outage cell comprises:
changing cell reservation indication, also called Cell Reserved For Operator Use, status information corresponding to the outage operator in the broadcast message to a reserved state.

## Patentansprüche

1. Vorrichtung für Zellausfallerkennung und -kompensation, wobei die Vorrichtung umfasst:
eine Überwachungseinheit (310), die konfiguriert ist, um Arbeitsstatusinformationen mehrerer Betreiber in einer Zelle einer Basisstation zu überwachen;
eine Ermittlungseinheit (320), die konfiguriert ist, um eine Ausfallzelle der Basisstation und einen Ausfallbetreiber in der Ausfallzelle gemäß den Arbeitsstatusinformationen zu ermitteln, die durch die Überwachungseinheit überwacht wurden; und
eine Kompensationseinheit (330, 520), die konfiguriert ist, um gemäß der Ausfallzelle und dem Ausfallbetreiber, die durch die Ermittlungseinheit ermittelt wurden, für den Ausfallbetreiber spezifische Ausfallkompensation für die Ausfallzelle durchzuführen;
eine Sendeeinheit (530), die konfiguriert ist, um Zellausfallinformationen an ein Netzwerkmanagementsystem zu senden, wobei die Zellausfallinformationen eine Kennung der Ausfallzelle und eine Kennung jedes Ausfallbetreibers in der Ausfallzelle umfassen; und
eine Empfangseinheit (510), die konfiguriert ist, um Kompensationsanweisungsinformationen von dem Netzwerkmanagementsystem gemäß den Zellausfallinformationen zu empfangen; und
wobei die Kompensationseinheit (330, 520) spezifisch konfiguriert ist, um die Ausfallkompensation, die für den Ausfallbetreiber spezifisch ist, für die Ausfallzelle gemäß den Kompensationsanweisungsinformationen durchzuführen, die durch die Empfangseinheit empfangen wurden.

2. Vorrichtung nach Anspruch 1, wobei die Ermittlungseinheit spezifisch für Folgendes konfiguriert ist:
wenn die überwachten Arbeitsstatusinformationen ein Alarm ist, der nur einen Betreiber betrifft, oder wenn die überwachten Arbeitsstatusinformationen ein Schlüsselleistungsindikator der Basisstation ist, der nur einen Betreiber betrifft, und der Schlüsselleistungsindikator unter einem vorgewählten Schwellenwert liegt, Ermitteln, dass eine Zelle der Basisstation, die den Betreiber einschließt, der dem Alarm oder dem Schlüsselleistungsindikator entspricht, einen Ausfall erfährt, und dass der Betreiber, der dem Alarm oder der Schlüsselleistungsindikator entspricht, den Ausfall in der Zelle der Basisstation erfährt; oder
wenn die überwachten Arbeitsstatusinformationen ein Alarm ist, der einen Betreiber und eine Zelle betrifft, oder wenn die überwachten Arbeitsstatusinformationen ein Schlüsselleistungsindikator der Basisstation ist, der einen Betreiber und eine Zelle betrifft, und der Schlüsselleistungsindikator unter einem vorgewählten Schwellenwert liegt, Ermitteln, dass die Zelle, die dem Alarm oder dem Schlüsselleistungsindikator entspricht, einen Ausfall erfährt, und dass der Betreiber, der dem Alarm oder der Schlüsselleistungsindikator entspricht, den Ausfall in der Zelle erfährt, die dem Alarm oder dem Schlüsselleistungsindikator entspricht.

3. Vorrichtung nach Anspruch 1 oder 2, wobei die Kompensationseinheit für Folgendes konfiguriert ist:
Verhindern, dass ein Nutzer des Ausfallbetreibers auf die Ausfallzelle zugreift, gemäß der Ausfallzelle und dem Ausfallbetreiber, die durch die Ermittlungseinheit ermittelt wurden, indem Statusinformationen, die den Ausfallbetreiber betreffen, in einer Broadcast-Nachricht modifiziert werden, die durch die Basisstation für die Ausfallzelle gesendet werden, oder Ermitteln, ob alle Betreiber in der Ausfallzelle den Ausfall erfahren, und falls dies der Fall ist, Verhindern, dass Nutzer der Ausfallbetreiber auf die Ausfallzelle zugreifen, indem Statusinformationen, die die Ausfallzelle betreffen, in einer Broadcast-Nachricht modifiziert werden, die durch die Basisstation für die Ausfallzelle gesendet wird; oder
Abweisen des Zugriffs eines Nutzers des Ausfallbetreibers in der Ausfallzelle auf die Ausfallzelle gemäß der Ausfallzelle und dem Ausfallbetreiber, die durch die Ermittlungseinheit ermittelt wurden, wenn der Nutzer des Ausfallbetreibers Zugriff auf die Ausfallzelle anfordert; oder
Verhindern, dass ein Nutzer des Ausfallbetreibers in einer der Ausfallzelle benachbarten Zelle auf die Ausfallzelle zugreift, gemäß der Ausfallzelle und dem Ausfallbetreiber, die durch die Ermittlungseinheit ermittelt wurden.

4. Verfahren für Zellausfallerkennung und -kompensation, wobei das Verfahren umfasst:
Überwachen (S101) von Arbeitsstatusinformationen mehrerer Betreiber in einer Zelle der Basisstation durch die Basisstation;
Ermitteln (S102) einer Ausfallzelle der Basisstation und eines Ausfallbetreibers in der Ausfallzelle gemäß den überwachten Arbeitsstatusinformationen; und
Durchführen (S103) von Ausfallkompensation, die für den Ausfallbetreiber für die Ausfallzelle spezifisch ist;
wobei das Verfahren vor dem Durchführen von Ausfallkompensation, die für den Ausfallbetreiber spezifisch ist, für die Ausfallzelle ferner umfasst:
Senden von Zellausfallinformationen an ein Netzwerkmanagementsystem, wobei die Zellausfallinformationen eine Kennung der Ausfallzelle und eine Kennung jedes Ausfallbetreibers in der Ausfallzelle umfassen; und
Empfangen von Kompensationsanweisungsinformationen, die das Netzwerkmanagementsystem gemäß den Zellenausfallinformationen sendet; und
wobei das Durchführen der Ausfallkompensation, die für den Ausfallbetreiber spezifisch ist, für die Ausfallzelle spezifisch umfasst:
Durchführen der Ausfallkompensation, die für den Ausfallbetreiber spezifisch ist, für die Ausfallzelle gemäß den Kompensationsanweisungsinformationen.

5. Verfahren nach Anspruch 4, wobei das Ermitteln einer Ausfallzelle der Basisstation und eines Ausfallbetreibers in der Ausfallzelle gemäß den überwachten Arbeitsstatusinformationen umfasst:
wenn die überwachten Arbeitsstatusinformationen ein Alarm ist, der nur einen Betreiber betrifft, oder wenn die überwachten Arbeitsstatusinformationen ein Schlüsselleistungsindikator der Basisstation ist, der nur einen Betreiber betrifft, und der Schlüsselleistungsindikator unter einem vorgewählten Schwellenwert liegt, Ermitteln, dass eine Zelle der Basisstation, die den Betreiber einschließt, der dem Alarm oder dem Schlüsselleistungsindikator entspricht, einen Ausfall erfährt, und dass der Betreiber, der dem Alarm oder der Schlüsselleistungsindikator entspricht, den Ausfall in der Zelle der Basisstation erfährt; oder
wenn die überwachten Arbeitsstatusinformationen ein Alarm ist, der einen Betreiber und eine Zelle betrifft, oder wenn die überwachten Arbeitsstatusinformationen ein Schlüsselleistungsindikator der Basisstation ist, der einen Betreiber und eine Zelle betrifft, und der Schlüsselleistungsindikator unter einem vorgewählten Schwellenwert liegt, Ermitteln, dass eine Zelle, die dem Alarm oder dem Schlüsselleistungsindikator entspricht, einen Ausfall erfährt, und dass der Betreiber, der dem Alarm oder der Schlüsselleistungsindikator entspricht, den Ausfall in der Zelle erfährt, die dem Alarm oder dem Schlüsselleistungsindikator entspricht.

6. Verfahren nach Anspruch 4 oder 5, wobei das Durchführen von Ausfallkompensation, die für den Ausfallbetreiber spezifisch ist, für die Ausfallzelle umfasst:
Verhindern, dass ein Nutzer des Ausfallbetreibers auf die Ausfallzelle zugreift, indem Statusinformationen, die den Ausfallbetreiber betreffen, in einer Broadcast-Nachricht, die durch die Basisstation für die Ausfallzelle gesendet werden, modifiziert werden; oder
Ermitteln, ob alle Betreiber in der Ausfallzelle den Ausfall erfahren, und falls dies der Fall ist, Verhindern, dass Nutzer der Ausfallbetreiber auf die Ausfallzelle zugreifen, indem Statusinformationen, die die Ausfallzelle betreffen, in einer Broadcast-Nachricht, die von der Basisstation für die Ausfallzelle gesendet wird, modifiziert werden; oder
Abweisen des Zugriffs eines Nutzers des Ausfallbetreibers in der Ausfallzelle auf die Ausfallzelle, wenn der Nutzer des Ausfallbetreibers Zugriff auf die Ausfallzelle anfordert; oder
Verhindern, dass ein Nutzer des Ausfallbetreibers in einer der Ausfallzelle benachbarten Zelle auf die Ausfallzelle zugreift, gemäß den Kompensationsanweisungsinformationen.

7. Verfahren nach Anspruch 6, wobei die modifizierenden Statusinformationen, die den Ausfallbetreiber betreffen, in einer Broadcast-Nachricht, die durch die Basisstation für die Ausfallzelle gesendet wird, folgendes umfassen:
Ändern der Zellreservierungsangabe, die auch als "Zelle reserviert für Betreibernutzung" ("Cell Reserved For Operator Use") bezeichnet wird, entsprechend dem Ausfallbetreiber in der Broadcast-Nachricht auf einen reservierten Status.

## Revendications

1. Appareil de détection et de compensation d'une indisponibilité de cellule, l'appareil comprenant :
une unité de surveillance (310), configurée pour surveiller des informations d'état de fonctionnement relatives à de multiples opérateurs dans une cellule d'une station de base ;
une unité de détermination (320), configurée pour déterminer une cellule indisponible de la station de base et un opérateur indisponible dans la cellule indisponible selon les informations d'état de fonctionnement surveillées par l'unité de surveillance ; et
une unité de compensation (330, 520), configurée pour mettre en oeuvre, selon la cellule indisponible et l'opérateur indisponible déterminés par l'unité de détermination, une compensation d'indisponibilité propre à l'opérateur indisponible pour la cellule indisponible ;
une unité d'envoi (530), configurée pour envoyer des informations d'indisponibilité de cellule à un système de gestion de réseau, les informations d'indisponibilité de cellule comprenant un identifiant de la cellule indisponible et un identifiant de chaque opérateur indisponible dans la cellule indisponible ; et
une unité de réception (510), configurée pour recevoir des informations d'instruction de compensation depuis le système de gestion de réseau selon les informations d'indisponibilité de cellule ; et
l'unité de compensation (330, 520) étant plus particulièrement configurée pour mettre en oeuvre la compensation d'indisponibilité propre à l'opérateur indisponible pour la cellule indisponible selon les informations d'instruction de compensation reçues par l'unité de réception.

2. Appareil selon la revendication 1, dans lequel l'unité de détermination est plus particulièrement configurée pour :
lorsque les informations d'état de fonctionnement surveillées constituent une alarme qui concerne uniquement un opérateur, ou lorsque les informations d'état de fonctionnement surveillées constituent un indicateur de performance clé de la station de base qui concerne uniquement un opérateur et l'indicateur de performance clé est inférieur à un seuil préétabli, déterminer qu'une cellule de la station de base comportant l'opérateur correspondant à l'alarme ou l'indicateur de performance clé connaît une indisponibilité et que l'opérateur correspondant à l'alarme ou l'indicateur de performance clé connaît l'indisponibilité dans la cellule de la station de base ; ou lorsque les informations d'état de fonctionnement surveillées constituent une alarme qui concerne un opérateur et une cellule, ou lorsque les informations d'état de fonctionnement surveillées constituent un indicateur de performance clé de la station de base qui concerne un opérateur et une cellule et l'indicateur de performance clé est inférieur à un seuil préétabli, déterminer que la cellule correspondant à l'alarme ou l'indicateur de performance clé connaît une indisponibilité et que l'opérateur correspondant à l'alarme ou l'indicateur de performance clé connaît l'indisponibilité dans la cellule correspondant à l'alarme ou l'indicateur de performance clé.

3. Appareil selon la revendication 1 ou 2, dans lequel l'unité de compensation est configurée pour :
selon la cellule indisponible et l'opérateur indisponible déterminés par l'unité de détermination, bloquer l'accès à la cellule indisponible d'un utilisateur de l'opérateur indisponible par modification d'informations d'état concernant l'opérateur indisponible dans un message diffusé envoyé par la station de base pour la cellule indisponible, ou déterminer si tous les opérateurs dans la cellule indisponible connaissent ou non l'indisponibilité et, si oui, bloquer l'accès à la cellule indisponible d'utilisateurs des opérateurs indisponibles par modification d'informations d'état concernant la cellule indisponible dans un message diffusé envoyé par la station de base pour la cellule indisponible ; ou
selon la cellule indisponible et l'opérateur indisponible déterminés par l'unité de détermination, refuser l'accès à la cellule indisponible d'un utilisateur de l'opérateur indisponible dans la cellule indisponible lorsque l'utilisateur de l'opérateur indisponible requiert l'accès à la cellule indisponible ; ou
selon la cellule indisponible et l'opérateur indisponible déterminés par l'unité de détermination, bloquer l'accès à la cellule indisponible d'un utilisateur de l'opérateur indisponible dans une cellule voisine de la cellule indisponible.

4. Procédé de détection et de compensation d'une indisponibilité de cellule, le procédé comprenant les étapes suivantes :
surveillance (S101), par une station de base, d'informations d'état de fonctionnement relatives à de multiples opérateurs dans une cellule de la station de base ;
détermination (S 102) d'une cellule indisponible de la station de base et d'un opérateur indisponible dans la cellule indisponible selon les informations d'état de fonctionnement surveillées ; et
mise en oeuvre (S103) d'une compensation d'indisponibilité propre à l'opérateur indisponible pour la cellule indisponible ;
le procédé comprenant en outre, avant l'étape de mise en oeuvre d'une compensation d'indisponibilité propre à l'opérateur indisponible pour la cellule indisponible, les étapes suivantes :
envoi d'informations d'indisponibilité de cellule à un système de gestion de réseau, les informations d'indisponibilité de cellule comprenant un identifiant de la cellule indisponible et un identifiant de chaque opérateur indisponible dans la cellule indisponible ; et
réception d'informations d'instruction de compensation envoyées par le système de gestion de réseau selon les informations d'indisponibilité de cellule ; et
l'étape de mise en oeuvre d'une compensation d'indisponibilité propre à l'opérateur indisponible pour la cellule indisponible comprenant plus particulièrement l'étape suivante :
mise en oeuvre de la compensation d'indisponibilité propre à l'opérateur indisponible pour la cellule indisponible selon les informations d'instruction de compensation.

5. Procédé selon la revendication 4, dans lequel l'étape de détermination d'une cellule indisponible de la station de base et d'un opérateur indisponible dans la cellule indisponible selon les informations d'état de fonctionnement surveillées comprend les étapes suivantes :
lorsque les informations d'état de fonctionnement surveillées constituent une alarme qui concerne uniquement un opérateur, ou lorsque les informations d'état de fonctionnement surveillées constituent un indicateur de performance clé de la station de base qui concerne uniquement un opérateur et l'indicateur de performance clé est inférieur à un seuil préétabli, détermination du fait qu'une cellule de la station de base comportant l'opérateur correspondant à l'alarme ou l'indicateur de performance clé connaît une indisponibilité et que l'opérateur correspondant à l'alarme ou l'indicateur de performance clé connaît l'indisponibilité dans la cellule de la station de base ; ou
lorsque les informations d'état de fonctionnement surveillées constituent une alarme qui concerne un opérateur et une cellule, ou lorsque les informations d'état de fonctionnement surveillées constituent un indicateur de performance clé de la station de base qui concerne un opérateur et une cellule et l'indicateur de performance clé est inférieur à un seuil préétabli, détermination du fait que la cellule correspondant à l'alarme ou l'indicateur de performance clé connaît une indisponibilité et que l'opérateur correspondant à l'alarme ou l'indicateur de performance clé connaît l'indisponibilité dans la cellule correspondant à l'alarme ou l'indicateur de performance clé.

6. Procédé selon la revendication 4 ou 5, dans lequel l'étape de mise en oeuvre de la compensation d'indisponibilité propre à l'opérateur indisponible pour la cellule indisponible comprend les étapes suivantes :
blocage de l'accès à la cellule indisponible d'un utilisateur de l'opérateur indisponible par modification d'informations d'état concernant l'opérateur indisponible dans un message diffusé envoyé par la station de base pour la cellule indisponible ; ou
détermination de savoir si tous les opérateurs dans la cellule indisponible connaissent ou non l'indisponibilité et, si oui, bloquer l'accès à la cellule indisponible d'utilisateurs des opérateurs indisponibles par modification d'informations d'état concernant la cellule indisponible dans un message diffusé envoyé par la station de base pour la cellule indisponible ; ou
refus de l'accès à la cellule indisponible d'un utilisateur de l'opérateur indisponible dans la cellule indisponible lorsque l'utilisateur de l'opérateur indisponible requiert l'accès à la cellule indisponible ; ou
blocage de l'accès à la cellule indisponible d'un utilisateur de l'opérateur indisponible dans une cellule voisine de la cellule indisponible selon des informations d'instruction de compensation.

7. Procédé selon la revendication 6, dans lequel l'étape de modification d'informations d'état concernant l'opérateur indisponible dans un message diffusé envoyé par la station de base pour la cellule indisponible comprend l'étape suivante :
passage, à un état réservé, d'informations d'état d'une indication de réservation de cellule, également dénommée Cellule Réservée à l'Usage de l'Opérateur, correspondant à l'opérateur indisponible dans le message diffusé.
